# EUROPÄISCHE PATENTSCHRIFT

(11) **EP 2 385 560 B1**
(45) Veröffentlichungstag und Bekanntmachung des Hinweises auf die Patenterteilung: **27.05.2015**
(21) Anmeldenummer: 11162303.9
(22) Anmeldetag: 13.04.2011
(51) Int. Cl.: H01L 31/042, H01L 31/048

(54) **Photovoltaikmodul**
Photovoltaic module
Module photovoltaïque

(30) Priorität: 15.04.2010 DE 202010005210 U
(43) Veröffentlichungstag der Anmeldung: 09.11.2011
(73) Patentinhaber: Kumatec Sondermaschinenbau & Kunststoffverarbeitung GmbH, 96524 Neuhaus-Schierschnitz (DE)
(72) Erfinder: Dr. Löffler, Joachim, 96524 Neuhaus - Schiernitz (DE)
(74) Vertreter: Pröll, Jürgen

(56) Entgegenhaltungen:
- EP-A1- 2 277 694
- EP-A2- 2 058 867

## Beschreibung

Die Erfindung betrifft ein Photovoltaikmodul mit den im Oberbegriff des Anspruchs 1 angegebenen Merkmalen.

Photovoltaikmodule, auch Solarmodule genannt, wandeln das Licht der Sonne direkt in elektrische Energie um. Als wichtigste Bestandteile enthält ein Photovoltaikmodul mehrere Solarzellen, die flächenmäßig auf einem Substratträger aufgebracht sind. Die einzelnen Solarzellen sind elektrisch untereinander durch band- bzw. streifenförmige Stromleiter einerseits und gruppenmäßig andererseits verbunden, so dass von den Stromleitern die generierte Energie abgenommen werden kann. Mehrere Photovoltaikmodule können dabei zu Photovoltaikanlagen verschaltet werden. Ein Photovoltaikmodul wird durch seine elektrischen Anschlusswerte, wie Leerlaufspannung und maximale Leistung charakterisiert. Diese hängen von den Eigenschaften der einzelnen Photovoltaikzellen und der Verschaltung der Photovoltaikzellen innerhalb des Moduls ab.

Ein Photovoltaikmodul weist eine transparente strahlungs- und witterungsbeständige Abdeckung, beispielsweise eine Glasscheibe oder eine Kunststoffscheibe, auf. Diese schützt die spröden Solarzellen, die in der Regel auf der Rückseite der Frontscheibe aufgedampft sind, vor mechanischen Einflüssen. Hinter der Schicht mit den Photovoltaikzellen und den verbindenden streifenförmigen Stromleitern kann eine Isolierschicht angebracht sein oder aber auch eine Rückwand, beispielsweise eine Glasscheibe. Die streifenförmigen Stromleiter sind durch die Rückwand oder durch die Vorderwand mit Kontakten innerhalb einer Anschlussdose verbunden, die ihrerseits mit den Leitern eines Kabels gekoppelt sind, um die erzeugte Energie in ein Netz einzuspeisen oder an einen Energiespeicher abzugeben. Die Photovoltaikzellen können durch Bedampfung auch direkt auf die Rückseite der Frontglasscheibe aufgebracht sein.

Die Anschlussdose mit der Freilaufdiode bzw. der Bypassdiode befindet sich auf der Vorder- oder Rückseite. Am häufigsten werden dabei Anschlussdosen verwendet, die aus Kunststoff bestehen und über einen Durchbruch in der Rückwand übergreifend vorgesehen und an der Rückwand angeklebt sind. Photovoltaikmodule der gattungsgemäßen Art sollen normalerweise über 20 Jahre benutzt werden können, gleich, ob sie nun auf Trägerkonstruktionen auf einer Freifläche aufgebracht oder auf einem Dach montiert sind.

Die Photovoltaikmodule sind stets unterschiedlichen Witterungsverhältnissen ausgesetzt. Es hat sich dabei gezeigt, dass die Klebeverbindungen der Anschlussdosen oftmals nicht den witterungsbedingten Wechselbelastungen standhalten und die Anschlussdosen abfallen, wodurch die Kontakte sowie die Bedampfungs- und/oder Bedruckungsschichten im Modul den Witterungsverhältnissen direkt ausgesetzt sind. Des Weiteren hat sich gezeigt, dass eine hohe Effizienz und lange Lebensdauer dann nur erreichbar sind, wenn eine wasserdampfdiffusionsdichte elektrische Verbindung mit den streifenförmigen Leitern nachhaltig sichergestellt werden kann.

Ein Beispiel für den beschriebenen Aufbau eines Photovoltaikelementes ist der DE 10 2008 025 955 B3 zu entnehmen. Diese Schrift gibt eine mit einem elektrischen Steckverbinder versehene, wasserdampfdiffusionsdichte, durchkontaktierte, nicht leitende Platte mit einer ersten und einer zweiten Seite an. Der elektrische Steckverbinder umfasst ein Andrückelement, z. B. eine Mutter, und ein darauf senkrecht angeordnetes Durchsteckelement, das von der ersten Seite her teilweise durch eine Bohrung in der nicht leitenden Platte durchgesteckt und in das Andrückelement eingeschraubt wird. Zwischen dem Andrückelement und der ersten Seite der nicht leitenden Platte ist ein Dichtungselement angeordnet, das ein wasserdampfdiffusionsstabiles Material enthält oder daraus besteht, das beim Festschrauben des Durchsteckelementes verpresst wird. Der Pressweg wird durch ein Stopfelement in Form eines Kunststoffringes, der den Durchbruch durch die Glasplatte umschließt, begrenzt. Der Steckverbinder und auch das Befestigungselement, das eine Mutter ist, bestehen aus Metall, so dass durch Bonden eine Verbindung mit den Photovoltaikzellen bzw. mit einem Photovoltaikmodul hergestellt werden kann.

Zur Erleichterung der Herstellung eines Solarmoduls wird in der DE 102 25 140 A1 vorgeschlagen, in einer Durchgangsöffnung des Substrats, auf dessen Vorderseite die Solarschicht angeordnet ist, einen Anschlusseinsatz einzusetzen, insbesondere einzupressen. Ein flacher Leiter wird von den Anschlüssen des Solarmoduls kommend mit der Vorderseite des Anschlusseinsatzes verlötet. Die Rückseite des Anschlusseinsatzes kann als Flachsteckzunge ausgebildet sein.

Aus der DE 10 2007 020 846 A1 ist eine Paneeldose zum elektrischen Anschluss eines Photovoltaikmoduls für eine Solaranlage mit einer Anschlusseinrichtung zum elektrischen Anschließen eines Anschlusskabels und mit einer Verbindungseinrichtung zum elektrischen Kontaktieren einer Anschlussleitung des Photovoltaikmoduls mit der Anschlusseinrichtung bekannt. Dabei sind die Anschlusseinrichtung als Kontaktbalken und die Verbindungseinrichtung als Federklammer ausgebildet, in die der Kontaktbalken einführbar und darin verklemmbar ist. Durch diese Maßnahme soll eine Paneeldose bereitgestellt werden, die auf ein Photovoltaikmodul einfach und verlässlich installierbar ist.

Aus der DE 10 2005 044 939 B4 ist eine elektrische Anschlussdose zum elektrischen Anschluss von Solarzellen eines Solarzellenmoduls bekannt, das ein Gehäuse aufweist, in dem wenigstens eine Schutzeinrichtung enthalten ist, die im Falle einer abgeschatteten Solarzelle als Strombypass für die abgeschattete Solarzelle wirkt. Zur Befestigung des Gehäuses ist hier nichts näheres ausgeführt.

Aus der DE 201 14 145 U1 ist eine elektrische Anschlussdose für den Einsatz bei Voltaikanlagen bekannt, die in der Draufsicht im Wesentlichen eine quadratische Form aufweist und von einem Deckel verschließbar ist. Die Dose weist seitliche Kabeleingänge zum Einführen von Elektrokabeln auf. Ein im Wesentlichen eine Diagonale des Gehäuses bildender Aufnahmesteg ist zur Befestigung einer der elektrischen Verbindung dienenden Lüsterklemme vorgesehen. Das Gehäuse wird auf die Rückseite des Photovoltaikmoduls wasserdicht angeklebt. Die elektrische Anschlussdose entspricht der Schutzart IP 65, Schutzklasse II, bis 800 (1000) V DC, Prüfspannung 3,5 KV DC, was einer allgemeinen Anforderung an solche Anschlussdosen entspricht.

Weiterhin ist aus der DE 699 34 471 T2 eine Anschlussdose bzw. eine Anschlussdosenvorrichtung für ein Photovoltaikpaneel bekannt, das ein Gehäuse aufweist, das auf der Rückseite des Paneels angebracht ist. In dem Gehäuse sind auch Freilauf- bzw. Bypassdioden angeordnet, die an jeder der Anschlussklemmen jedes Moduls vorgesehen sein müssen und die im normalen Betriebszustand (Modul liefert Strom) in Sperrrichtung gepolt sind.

Aus der DE-PS 23 12 724 sind ein Verfahren und eine Vorrichtung zum Ultraschallschweißen eines aus Metall bestehenden Bauteils mit einem aus Nichtmetall gebildeten Bauteil unter Einfügung einer metallischen Zwischenlage bekannt, bei dem beispielsweise eine Aluminiumschicht oder eine Aluminiumfolie zwischengefügt ist und im vorgewärmten Zustand mittels einer Sonotrode verschweißt wird. Die Flächenhaftung an dem nichtmetallischen Träger ist dabei so gut, dass ein Abziehen des metallischen Bauteils unter normalem Kräfteaufwand nicht möglich ist. Beim Ultraschweißvorgang wird das Metallteil mit einem Andruck von mindestens 2 N/mm² in Bezug auf die Größe der Verbindungsfläche der zu verschweißenden Bauteil in einer parallel zur Verbindungsfläche verlaufende Ultraschallschwingung versetzt. Als nichtmetallische Träger können Glas, keramische Platten oder dergleichen verwendet werden.

Aus der DE 195 46 997 C2 ist ebenfalls ein Verfahren zum Verbinden von metallischen Teilen mit nichtmetallischen Teilen, insbesondere von Teilen aus Aluminium oder Kupfer mit Teilen aus Glas oder Keramik, durch Vibrationsschweißen mit einer Vibrationsbewegung durch Generierung konstant rotierender Schwingungen bekannt. Bei diesem Verfahren wird eine Sonotrode ebenfalls senkrecht zur Schweißfläche angepresst. Die direkte Schweißverbindung zwischen Teilen aus Metall und Teilen aus Glas oder Glaskeramik ist hierdurch möglich. Die Anwendung von Ultraschall ist ferner aus der DE-Z "Schweißen und Schneiden", 45, 1993, Heft 4, Seiten 198 bis 202 bekannt. Bei dem dort beschriebenen Fügen von Glas bzw. Glaskeramik und reinem Aluminium durch Ultraschall wird die zum Schweißen benötigte Energie in Form von mechanischen Schwingungen eines Resonators, einer Sonotrode, unter der Wirkung einer geringen statischen Anpresskraft als Scherwellen in das Schweißgut eingebracht. Bei entsprechend hoher Temperatur kann auch Edelstahl als Metall verwendet werden.

Ferner ist aus der DE 20 2008 016 010 U1 eine Vorrichtung zur materialschlüssigen Verbindung von glasartigen Bauteilen mit Metall bekannt, mit der ein Blechstreifen mittels Sonotrode auf eine Glasplatte aufgeschweißt wird.

EP 2 277 694 A1 beschreibt ein Photovoltaikmodule mit verklebter wärmebeständiger Mehrschichtrückfolie an der eine Anschlussdose befestigt werden kann. Die Anschlussdose besteht aus Kunststoff. Die Mehrschichtrückfolie besteht Kunststoff, wobei die Verbindung der Mehrschichtrückfolie mit der Anschlussdose über ein Kunststoff-Ultraschallschweißen erfolgen kann.

Ausgehend vom Stand der Technik liegt der Erfindung die Aufgabe zugrunde, eine gegen Umwelteinflüsse resistente Befestigung für Anschlussdosen und Befestigungsmitteln an einem Photovoltaikmodul anzugeben, die langlebig ist und bei der die dafür benötigten Elemente vorgefertigt werden können und einfach platzierbar sind.

Die Erfindung löst die Aufgabe dadurch, dass die Anschlussdose und/oder die Befestigungsmittel Formteile aus Kunststoff oder Druckguss oder Blech sind, die an einer Seite mit einer Fläche an der Rückwand oder an der Schutzplatte anliegen und an der anderen Seite als Funktionseinheit ausgebildet sind und Aus- und Anformungen für die Aufnahme von elektrischen und/oder mechanischen Bauelementen, Haltern und/oder eines Gehäusedeckels aufweisen, und dass in dem Basiskörper mindestens an zwei gegenüberliegenden Seiten vorstehende Laschen aus Metall eingebettet oder Führungen zur Aufnahme von übergreifenden Metallstreifen angeformt sind, deren Enden als Laschen an der aus Glas bestehenden Rückwand oder der aus Glas bestehenden Schutzplatte anliegen und dass die Metalllaschen durch Ultraschallschweißung an der aus Glas bestehenden Rückwand oder an der aus Glas bestehenden Schutzplatte angeschweißt sind.

Während beim Stand der Technik komplizierte Rahmenstrukturen für die Photovoltaikmodule geschaffen werden müs sen, um die Module an Trägerkonstruktionen, die z. B. auf einem Dach angebracht sind, montieren zu können, können nach der Lehre der Erfindung Formteile direkt an die Rückwand angeschweißt werden, um das Photovoltaikmodul hierüber an die Trägerkonstruktion anschrauben oder einhaken zu können. Die Vorfertigung kann sowohl im Herstellungsbetrieb des Photovoltaikmoduls als auch vor Ort erfolgen, wenn die Ultraschweißgeräte mit Sonotroden vorhanden sind. Die gleiche Technologie kann auch dazu verwendet werden, um als Formteil ausgebildete Anschlussdosen an der Rückwand oder an der Schutzplatte zu befestigen. Durch die erfinderische Lehre werden die Aufbauten und auch die Montagearbeiten für solche Photovoltaikmodule wesentlich vereinfacht und verbilligt.

Vorteilhafte Weiterbildungen der Erfindung sind in den Unteransprüchen im Detail angegeben.

In weiterer Ausgestaltung ist vorgesehen, dass die Anschlussdose und/oder die Befestigungsmittel jeweils einen Basiskörper aus Kunststoff oder Metall aufweisen, der an einer Seite mit einer Fläche an der Rückwand oder an der Schutzplatte anliegt, und dass an der anderen Seite des Basiskörpers Aus- und Anformungen für die Aufnahme von elektrischen und/oder mechanischen Bauelementen, Haltern oder eines Deckels vorgesehen sind.

Es ist ersichtlich, dass ein Basiskörper aus Kunststoff, der beispielsweise Bestandteil einer Anschlussdose oder eines Befestigungsmittels sein kann, vorgefertigt werden kann. Diese aus Kunststoff gefertigten Basiskörper sind so ausgebildet, dass sie mit der einen Seite mit mindestens einer Fläche an der Rückwand oder an der Schutzplatte angedrückt werden können. Die andere Seite weist Strukturen auf, die für den jeweiligen Einsatz eingebracht sind. Beispielsweise sind Aus- und Anformungen für die Aufnahme von elektrischen oder mechanischen Bauelementen vorgesehen. Der Basiskörper kann aber auch eine Struktur aufweisen, die es ermöglicht, einen formangepassten Deckel aufzusetzen, beispielsweise bei Verwendung des Basiskörpers für eine Anschlussdose. Es können aber auch Aufnahmen für die Befestigung von Haltern vorgesehen sein, mit denen das so bestückte Photovoltaikmodul an der Trägerkonstruktion befestigbar ist. Der Basiskörper kann aber auch eine Form aufweisen, die es ermöglicht, ein komplettes Gehäuse daran zu befestigen. Dies kann beispielsweise durch Aufschub-Rastverbindungen erfolgen. Es ist aber auch möglich, diese Teile, wiederum aus Kunststoff gefertigt, mittels Ultraschall an den Fügeflächen miteinander unlösbar zu verbinden. Ebenso kann vorgesehen sein, dass die Befestigung durch Kleben oder mittels Schrauben oder anderer kraftschlüssiger Verbindungselemente erfolgt, zu welchem Zweck entsprechende Anformungen am Basiskörper und an dem Gehäuse zur Aufnahme derselben vorzusehen sind. Der Basiskörper kann darüber hinaus eine universelle Struktur aufweisen, damit er sowohl für Anschlussdosen unterschiedlicher Ausführung als auch für Befestigungsmittel unterschiedlicher Ausführung verwendbar ist und diese Teile auf einfache Weise damit verbindbar sind.

Gehalten wird der Basiskörper an der Schutzplatte oder der Rückwand mittels an zwei gegenüberliegenden Seiten vorstehenden Laschen, die beim Herstellungsprozess des Basiskörpers als Einlegeteil aus Metall eingebettet sind. Es können aber auch Aufnahmen am Basiskörper angeformt sein, in die ein den Basiskörper übergreifender Metallstreifen einfügbar ist, dessen Enden als Laschen an der Rückwand oder der Schutzplatte anliegen. Die aus Metall bestehenden Laschen werden an einer aus Glas bestehenden Rückwand oder einer Schutzplatte angeschweißt. Wenn die Metallstreifen an einer Glasplatte mittels eines Ultraschallschweißkopfes (Sonotrode) angeschweißt werden, sind die Bindungskräfte ausreichend hoch, um auch hohe statische Belastungen, beispielsweise bei der Verbindung des Basiskörpers mit einem Halter und dessen Befestigung an einer Trägerkonstruktion, aushalten zu können. Diese Schweißverfahren sind anhand des eingangs genannten Standes der Technik im Einzelnen angegeben. Die Verwendung von Metallstreifen zum Befestigen des Basiskörpers an der Rückwand oder der Schutzplatte gestattet die Fertigung des Basiskörpers auch aus anderen Materialien, z. B. kann der Basiskörper ein Zinkgussformteil oder ein Magnesiumformteil sein, in das die Metallstreifen eingebettet sind oder Halter zur Aufnahme derselben vorgesehen sind.

An den gegenüberliegenden Seiten am Basiskörper können grundsätzlich mehrere Laschen vorgesehen sein, die in definierten oder unregelmäßigen Abständen zueinander eingebettet sind. Es ist aber auch möglich, einen Blechstreifen in den Kunststoff oder in den Druckgusskörper bei der Herstellung des Basiskörpers einzuspritzen bzw. zu gießen, der beispielsweise den Seitenrand um 6 mm bis 8 mm übersteht. Somit kann die gesamte Fläche des Blechstreifens als Halterung benutzt werden. Im Falle der Ausbildung aus Kunststoff können solche Laschen angeformt sein. Die Flächen der Laschen bestimmen dabei die Verbindungskraft zwischen der Glasplatte und dem Metall der Lasche. Um eine bessere Bindungskraft mit dem Basiskörper und auch eine hohe Formstabilität von statischen Belastungen des Basiskörpers zu erreichen, können die eingebetteten Laschenenden aus Metall oder der eingebettete Blechstreifen eingedrückte Versteifungen und/oder Durchgangslöcher aufweisen, die von dem Kunststoff vollständig umschlossen sind. Als Versteifungen werden beispielsweise U-förmige Sicken eingedrückt. In die Bogenabschnitte dieser Sicken können auch Durchbrüche eingebracht sein, so dass der Kunststoff beim Umspritzen des Einlegeteils in einer Form in die Durchbrüche einzudringen vermag. Hierdurch ist eine hohe Stabilität gegeben. Die seitlich vorstehenden Laschen sind so abgewinkelt, dass sie an der Oberfläche der Schutzplatte oder der Rückwand anliegen. Wenn ein Druckguss-Basiskörper aus Metall zur Anwendung kommt, können die Laschen auch angeformt sein und diese direkt an die Glasplatte angeschweißt werden.

Der Metallstreifen kann auch so geformt und im Kunststoff oder Druckguss eingebettet sein, dass abschnittsweise Flächen direkt an der Rückwand oder an der Schutzplatte anliegen. Darüber ist auch eine zusätzliche Verschweißung möglich, so dass die Bindungskraft hierdurch wesentlich erhöht werden kann. Dies ist selbstverständlich auch möglich, wenn der Kunststoff- oder Druckgusskörper mit einer größeren Fläche anliegt. Auch diese aneinanderliegenden Flächen lassen sich durch Ultraschallschweißung in bekannter Weise mit der Rückwand oder der Schutzplatte verbinden, so dass neben den äußeren Befestigungen auch innere Befestigungen gegeben sind.

Wenn ein Durchbruch in dem Basiskörper, z. B. zum Durchführen von Kontaktanschlüssen, vorgesehen ist, so kann zur Vermeidung des Durchtritts von Feuchtigkeit selbstverständlich zwischen der Rückwand oder der Schutzplatte und der Unterseite des Basiskörpers eine in ein U-förmige Nut eingelegte oder angespritzte Dichtung vorgesehen sein, die beim Anschweißen des Basiskörpers an der Rückwand oder der Schutzplatte eine hermetische Abdichtung gewährleistet. Über das Loch im Basiskörper ist der streifenförmige Stromleiter zugänglich, der an einer Seite oder einer Zwischenschicht des Photovoltaikmoduls aufgebracht ist, wenn in der entsprechenden Platte oder der Rückwand eine entsprechend ausgeformte Öffnung vorgesehen ist. Der Kontaktstreifen kann dabei durch Anpressen beispielsweise mittels eines Sicherungsstopfens mit dem Stromleiter kontaktieren. Er kann aber auch durch die Öffnung hindurch angeschweißt werden.

In einer anderen Variante ist vorgesehen, dass mit dem Basiskörper oder einem daran befestigten Gehäuse ein Deckel verbindbar ist, um beispielsweise die Kontaktierungsstellen insgesamt zu schützen. In diesen Deckel können aber auch Leiterplatten und/oder Kühlkörper mit elektronischen Bauelementen bestückt und/oder mechanische Bauteile, Kabelenden und abgewinkelte zungenförmige Kontaktstreifen eingesetzt sein, die beim Zusammenfügen des Deckels mit dem Basiskörper auf die streifenförmigen Stromleiter aufgreifen. Es kann also die gesamte Schaltung untergebracht werden. Insbesondere können die Kopplungsdioden, die die Photozellen gegen den Stromrückfluss schützen, hier eingebracht werden und auch die Kontaktstreifen mit den entsprechenden Leiterplatten verbunden sein.

Wenn in einem Deckel ein Durchgangsloch vorgesehen ist, so muss es nach der Montage mit einem Stopfen oder einer Kappe zu verschlossen werden, damit keine Feuchtigkeit eindringen kann. Es ist dabei zweckmäßig, den Stopfen oder die Kappe als Füllkörper auszubilden, damit möglichst keine Lufträume enthalten sind, um Kondenswasserbildung bei Temperaturschwankungen ebenfalls zu vermeiden. Auch können in einem Deckel oder in zwei Gehäuseteilen halbschalenförmige Aufnahmen zur Aufnahme von Kabelenden eines oder mehrerer Verbindungskabel vorgesehen sein. Die Seelen dieser Kabelenden können mit den Kontaktstreifen durch Klemmverbinder oder Schweißverbindung verbunden sein. Auch ist es möglich, den Basiskörper mit einer umlaufenden Dichtung zu versehen, die diesen gegenüber der Rückwand hermetisch abdichtet. Ferner ist es möglich, die Metallstreifen an allen gegenüberliegenden Flächen vorzusehen und - falls der Basiskörper polygonale Struktur aufweist - an allen Seiten anzuschweißen, damit eine möglichst hohe Bindungswirkung mit dem Trägermaterial, nämlich dem Glas, gegeben ist.

Im Falle, dass der Basiskörper als Universalträger ausgebildet ist und Rippen und Kammern sowie Aufnahmen aufweist, die unterschiedlich belegbar oder bestückbar sind, braucht nur ein einziges Teil in der Vorfertigung hergestellt zu werden, um unterschiedliche Adaptionen aufnehmen zu können. So ist es beispielsweise auch möglich, an dem Halter hakenförmige Klemmeinrichtungen zu befestigen, durch die ein quer verlaufendes Metallband ziehbar ist, das an den Enden Laschen aufweist, mit denen das gesamte Gehäuse an der Rückwand oder der Schutzplatte durch Anschweißen fixierbar ist.

Die Grundform des Basiskörpers kann rechteckförmig sein oder auch jede andere polygonale oder runde Form aufweisen. Die Anfügeteile können ebenfalls beliebige Strukturen aufweisen. Die Befestigungsmittel an dem Basiskörper sind entsprechend anzupassen.

Wenn Formteile zur Anwendung kommen, also einteilig bereits aus Kunststoff oder Druckguss gefertigte Haken, Halteblöcke oder andere Halter, so weisen auch diese die Blechstreifen auf bzw. werden sie bei Materialverträglichkeit über vorgesehene Laschen direkt an der Rückwand des Photovoltaikmoduls angeschweißt. Dies kann auch unter Zwischenfügung von Aluminiumfolie oder dergleichen geschehen, wie anhand des Standes der Technik eingangs beschrieben worden ist. Soweit es sich um Spritz- oder Gussteile handelt, werden die Materialstreifen eingegossen oder angeformt.

Die Erfindung wird nachfolgend anhand der in den Zeichnungen dargestellten Ausführungsbeispiele ergänzend erläutert.

In den Zeichnungen zeigen:
- Fig. 1: in einer Explosionszeichnung einen Ausschnitt aus einer Rückwand eines Photovoltaikmoduls mit einem Blechstreifen mit seitlichen Laschen und einem Kunststoffspritzteil, das gemeinsam mit dem Blechstreifen den Basiskörper bildet,
- Fig. 2: einen an einer Rückwand angeschweißten Basiskörper,
- Fig. 3: einen Basiskörper mit Befestigungsmitteln,
- Fig. 4: eine Anschlussdose an einer Rückwand eines Photovoltaikmoduls,
- Fig. 5: eine Explosionszeichnung der Anschlussdose gemäß Fig. 4,
- Fig. 6: eine andere Anschlussdose in einer Explosionszeichnung oberhalb einer Rückwand eines Photovoltaikmoduls,
- Fig. 7: eine rechteckförmige Anschlussdose an der Rückwand eines Photovoltaikmoduls,
- Fig. 8: eine Explosionszeichnung eines Basiskörper und eines mit dem Basiskörper verbindbaren Gehäuses einer Anschlussdose nach Fig. 7,
- Fig. 9: eine Unteransicht des Gehäuses der Anschlussdose nach Fig. 7 und 8 und eine Draufsicht auf einen Basiskörper,
- Fig. 10: eine Ansicht auf das offene Gehäuses nach den Fig. 7, 8 und 9,
- Fig. 11: ein Beispiel einer Rückwand eines Photovoltaikmoduls mit vier Haken,
- Fig. 12: ein vergrößerter Eckausschnitt der Rückwand nach Fig. 11 mit einem Haken,
- Fig. 13: eine Rückwand mit aufgesetzten Formkörpern in Form von Befestigungsblöcken und
- Fig. 14: einen vergrößerten Eckausschnitt des Beispiels in Fig. 13.

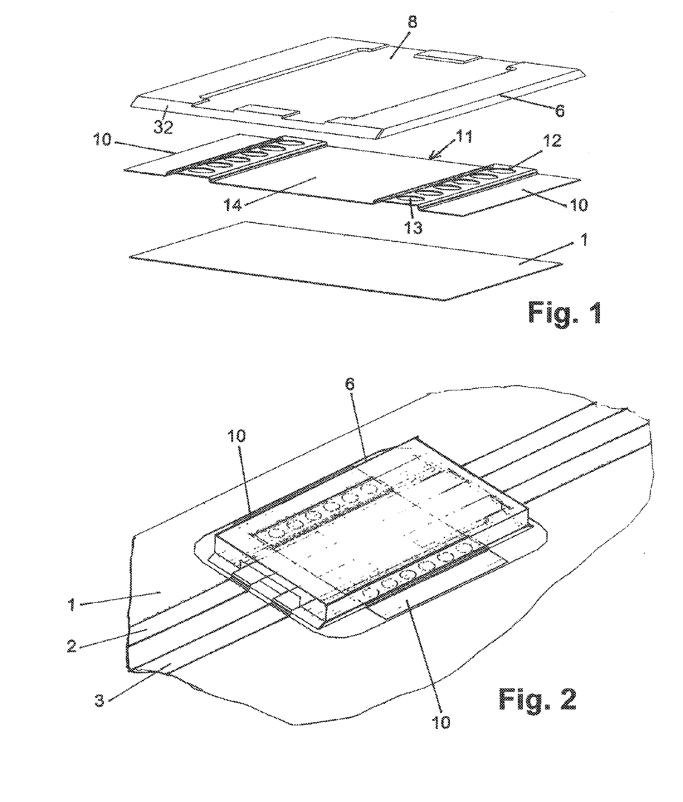

In den Zeichnungen zeigt Fig. 1 in einer perspektivischen Explosionszeichnung eine Rückwand 1 eines Photovoltaikmoduls, einen Blechstreifen 11, der seitliche Laschen 10 aufweist und U-förmige, eingedrückte Versteifungen 12 mit Durchgangslöchern 13 sowie einen mittigen Flächenabschnitt und einen Basiskörper 6. Der Basiskörper kann aus Kunststoff oder Metall bestehen. Beim Einbetten des Blechstreifens 11 werden Löcher 13 mit dem Gießmaterial ausgefüllt. Der Basiskörper 6 kann aus Kunststoff bestehen und weist Ein- und Ausformungen auf. Wenn ein Druckguss- oder ein Blechformteil als Basiskörper zur Anwendung kommt, können die Laschen und/oder die Anlagefläche an die Glasplatten punktuell und flächenmäßig angeschweißt werden, ohne dass es eines Blechstreifens bedarf. Handelt es sich um ein Insertteil, bei dem der Blechstreifen vollständig in Kunststoff eingebettet ist, werden die seitlich vorstehenden Laschen 10 an der Rückwand angeschweißt. Als metallisches Material kommt hier beispielsweise Edelstahl, Zinkguss, Magnesium oder Aluminium in Frage. Wenn die Rückwand 1 aus Glas besteht, wird der Basiskörper mittels einer Sonotrode mit den Laschen 10 an der Oberfläche der Rückwand 1 angeschweißt. Diese bekannten Verfahren sind eingangs beschrieben.

Fig. 2 zeigt den angeschweißten Zustand eines Basiskörpers 6 mit einer anderen Struktur. Des Weiteren zeigt die Abbildung, dass auf bzw. an der Unterseite der Rückwand 1 Stromleiter 2 und 3 vorgesehen sind, die mit Abschnitten unterhalb des Basiskörpers 6 enden oder Abwinklungen aufweisen, so dass diese von einem Obergehäuse, das auf den Basiskörper 6 aufdrückbar ist, eingeklemmt werden können.

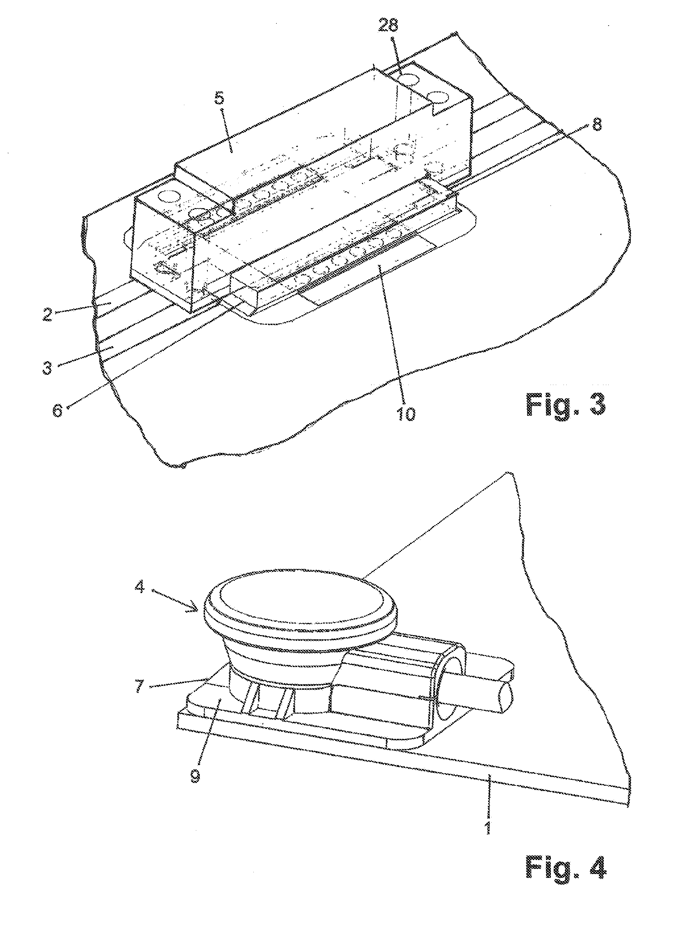

In Fig. 3 ist ein Ausführungsbeispiel dargestellt, bei welchem an den Basiskörper 6 Befestigungsmittel 5 angebracht sind. Der Basiskörper ist, wie in den Figuren zuvor, über die Laschen 10 an eine Glasscheibe 1 angeschweißt und daran gesichert gehalten. Der Basiskörper 6 weist eine Struktur auf, um die Befestigungsmittel 5, hier einen Montageblock, aufnehmen zu können. Dieser Montageblock kann beispielsweise auch aus Kunststoff bestehen und wird angeschweißt, so dass in die dargestellten Bohrungen 28 eine Schraube eingeschraubt werden kann bzw. Schrauben eingeschraubt werden können, die durch Bohrungen an der Trägerstruktur für ein solches Modul hindurchgesteckt werden. Auch hier sind die sich an der Unterseite befindenden Stromleiter 2 und 3 mit eingezeichnet.

In Fig. 4 ist ein Ausführungsbeispiel gezeigt, bei dem an dem Basiskörper 7 seitlich vorstehende Laschen 9 aus Kunststoff angeformt sind. Wenn die Rückwand 1 oder die Schutzplatte aus Kunststoff bestehen, ist es möglich, den Basiskörper 7 über die Laschen hieran anzuschweißen. Die vorstehenden Flächen ermöglichen das Aufdrücken einer Sonotrode.

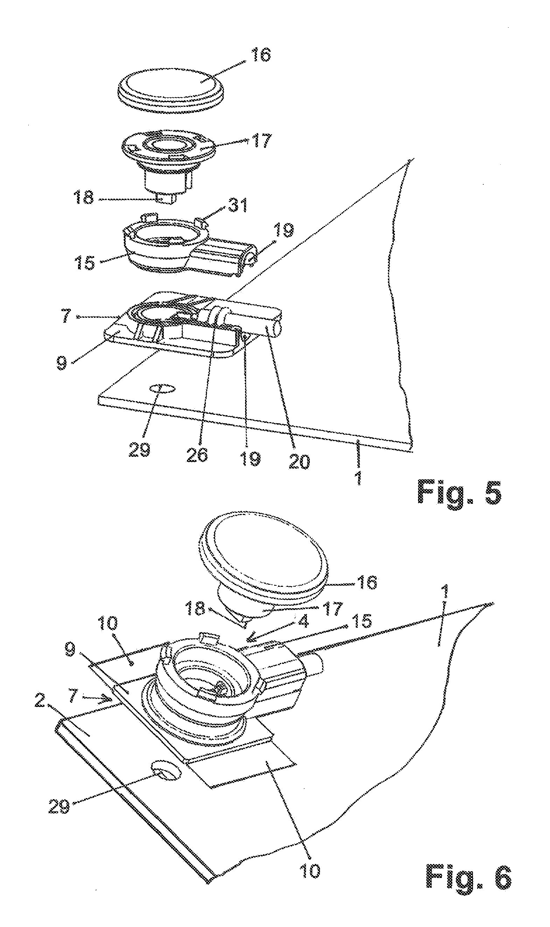

Die Anschlussdose 4 ist in Fig. 5 in einer Explosionszeichnung oberhalb einer Rückwand 1 dargestellt. Diese Anschlussdose 4, die oberhalb einer Glasplatte in perspektivischer Explosionszeichnung dargestellt ist, besteht aus einem Basiskörper 7, der aus Kunststoff gefertigt ist und in welchem eine Aufnahme 19 für ein Kabelende 20 halbschalenförmig eingearbeitet ist. Das Kabel 20 ist mittels O-Ringe 26 in einem dafür vorgesehenen Profil festgeklemmt. An dem Basiskörper 7 sind seitlich aus Kunststoff bestehende Laschen 9 angeformt. Der Basiskörper 7 wird an die aus Kunststoff bestehende Rückwand 1 angeschweißt. Wenn in den Kunststoff Metallstreifen eingebettet sind und die Rückwand 1 aus Glas besteht, können diese, wie zuvor schon beschrieben, durch Ultraschallschweißung an der Glasplatte befestigt werden. Des Weiteren befindet sich in der Rückwand 1 ein Durchgangsloch 29, durch das hindurch die untenseitig angebrachten, nicht dargestellten Stromleiter zugänglich sind. Auf einen Stromleiter greift ein abgewinkelter Kontaktstreifen, der nicht dargestellt ist. Mit dem Basiskörper 7 ist ein Deckel 15 verbindbar, der die Oberschale für den Kabelkanal mit beinhaltet. Die Oberschale mit der Aufnahme 19 wird auf die konturenangepasste Aufnahme 19 im Basiskörper 7 aufgedrückt. Die Teile können ebenfalls durch Ultraschallschweißung miteinander verschweißt oder verklebt sein. Obenseitig weist der Deckel 15 jeweils um 90° versetzte Rastnasen 31 auf, auf die ein Niederhalter 17 aufdrückbar ist, der an der Unterseite einen vorstehenden Stempel 18 aufweist, der beim Eindrücken in den Deckel 15 mit der Unterseite auf der oder die nicht sichtbaren abgewinkelten Kontaktstreifen drückt und dabei diesen oder diese gegen die nicht sichtbaren Stromleiter presst. Abgedeckt wird der zusammengesetzte Satz mittels einer Kappe 16.

In Fig. 6 ist eine Variante zu der Ausführung nach Fig. 5 dargestellt. Diese weist die angesprochenen eingegossenen Blechstreifen mit den Laschen 10 auf und kann auf der Rückseite der Rückwand 1 hiermit angeschweißt werden. An dem Kunststoffgrundkörper befindet sich ebenfalls ein Gehäuseteil, das von einem Deckel 15 verschlossen ist. In die Öffnung des Deckels 15 wird der Niederhalter 17 eingedrückt. Der Niederhalter 17 ist so dimensioniert, dass er den Raum in dem Deckel 15 vollständig ausfüllt, so dass keine Feuchtigkeit an die Kontaktstelle des Kontaktstreifens gelangen kann. Die Kappe 16 verhindert, dass die Kontakte und der Innenraum verschmutzen können.

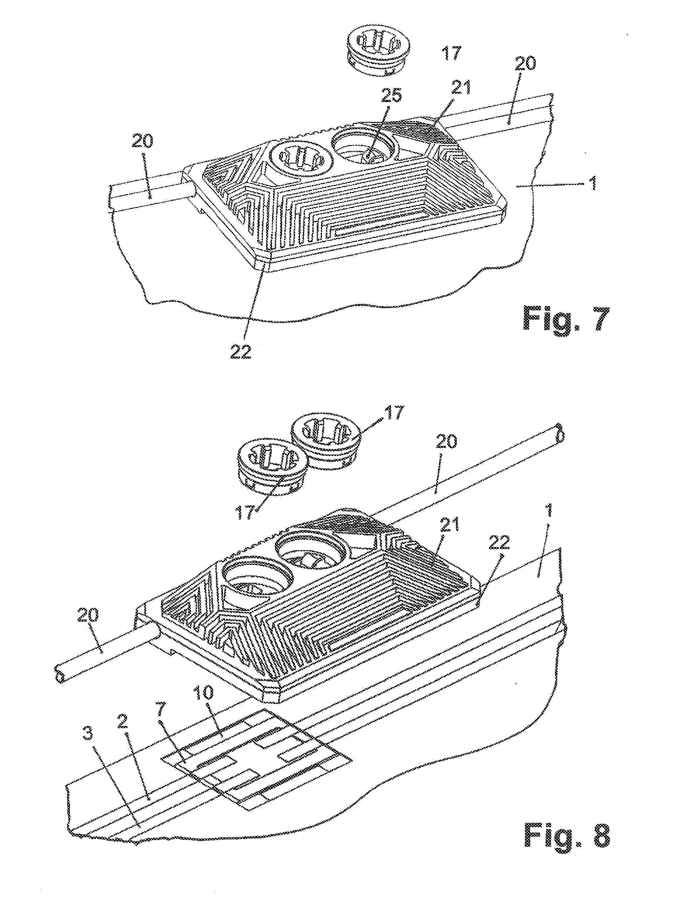

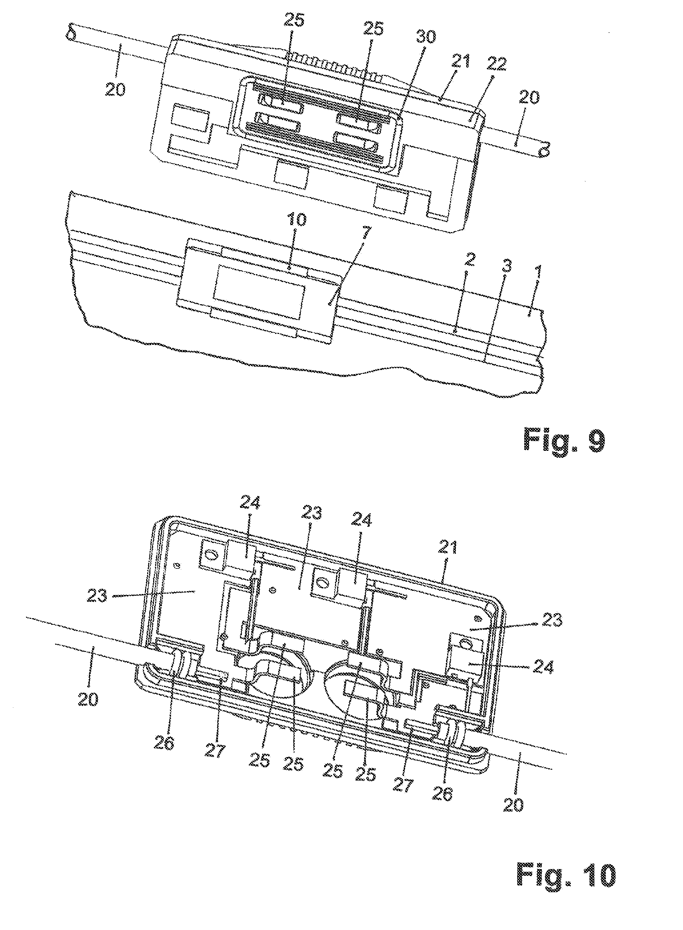

In den Fig. 7 bis 10 ist ein weiteres Ausführungsbeispiel einer Anschlussdose dargestellt. Diese weist eine im Wesentlichen rechteckförmige Grundstruktur auf und besteht aus einem Gehäuse 22 mit aufgesetztem Deckel 21, in dem sich Durchgangsöffnungen befinden, über die die Kontaktstreifen 25 zugänglich sind, die mit den Stromleitern 2 oder 3 durch Schweißen verbindbar sind. Nach dem Festschweißen werden die Öffnungen mit Hilfe der Niederhalter 17 verschlossen. Der Deckel 21 ist so ausgelegt, was aus Fig. 10 ersichtlich ist, dass darin Leiterplatten 23 befestigt werden können, die elektronische Bauelemente 24 tragen. Die eingezeichneten Platten können auch der Wärmeabfuhr dienen und aus Metall bestehen. Die Kontaktierungen sind hier im Einzelnen nicht eingezeichnet. Deutlich sichtbar sind die Kontaktstreifen 25 angeformt, über die der Kontakt mit den Stromleitern 2, 3 auf der Glasplatte, z. B. durch Anschweißen oder Andrücken, hergestellt wird. Die eingezeichneten elektronischen Bauelemente sind Freilauf- bzw. Bypassdioden, die einen Stromrückfluss in die Photovoltaikmodule verhindern. Die Kontaktstreifen 25 sind mit den vorstehenden Leiterenden 27 der Kabelenden 20 durch Anschweißen verbunden. Der so vorgefertigte Deckel 21 wird mit dem Gehäuse 22 verbunden.

Im vormontierten Zustand, bei dem der Deckel 21 und das Gehäuse 22 miteinander z. B. verschweißt, verklebt oder verschraubt sind, kann die Einheit mit einem Basiskörper 7 verbunden werden, der, wie im Beispiel von Fig. 1 gezeigt, mittels Laschen aus Metall an der Glasplatte, der Rückwand 1, angeschweißt ist. Dazu weist der Basiskörper 7 entsprechende Aufnahmen auf, die mit der Unterseite des Gehäuses 22 korrespondierend angebracht sind. Beispielshaft zeigt Fig. 9, dass an der Unterseite auch Teilflächen als Anlageflächen vorgesehen sein können, während die Kontaktstreifen 25 untenseitig vorstehen und beim Aufbringen auf den Kontakt den Basiskörper 7 mit den Stromleitern 2, 3 kontaktieren. Des Weiteren ist ein Dichtungsring 30 eingezeichnet, der das Feld der Kontaktstreifen 25 umgibt und eine hermetische Feuchtigkeitsabdichtung gewährleistet. Dieser Dichtungsring 30 greift in einen Durchbruch im Niederhalter 17 ein. Die Unterseite des Gehäuses 22 kann mit dem Basiskörper 7 auch verschweißt oder hieran angeklebt sein. Dadurch ist eine einfache Montage auch vor Ort möglich.

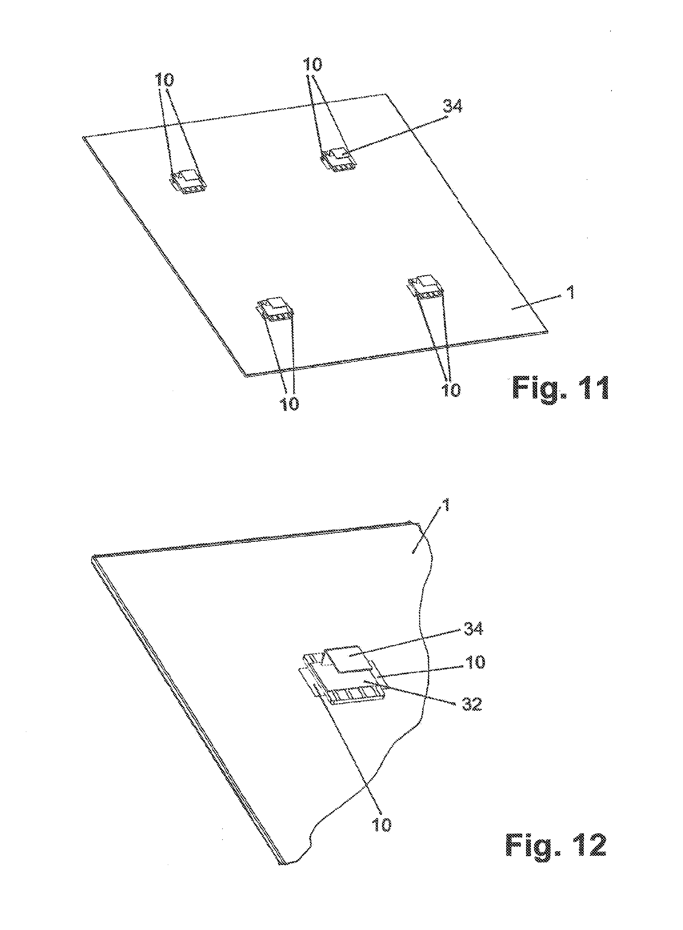

In den Fig. 11 und 12 ist beispielhaft die Rückwand eines Photovoltaikmoduls dargestellt, an der Formkörper 32 in Form von Haken mittels vorstehender Laschen 10 an der Rückwand angeschweißt sind. Es ist ersichtlich, dass ein solches Modul beispielsweise an einer Dachlatte oder einer entsprechend aufgesetzten Leiste auf einfache Weise einhängbar ist. Komplizierte und aufwändige Rahmenkonstruktionen braucht ein solches Modul für die Befestigung nicht mehr aufzuweisen. In Fig. 12 ist der Haken 34 des Formteils 32 vergrößert dargestellt. Dieser kann beispielsweise aus Kunststoff oder auch aus Druckguss bestehen. Über die vorgesehenen Laschen 10 ist ein Anschweißen auf einfache Weise an der Rückwand möglich.

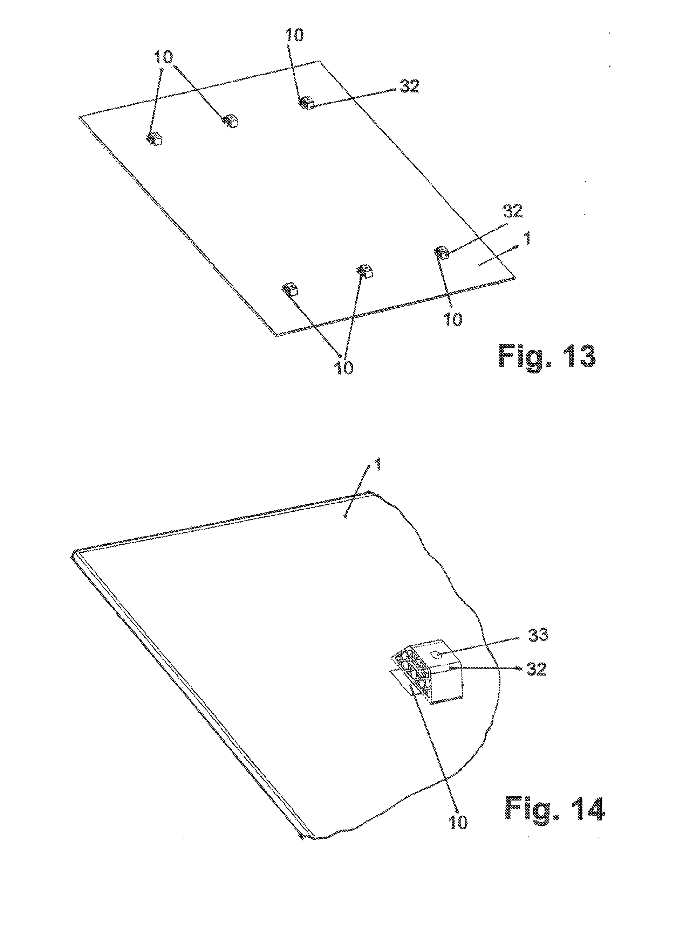

In den Fig. 13 und 14 ist eine Variante eines einteiligen Formteils 32 dargestellt, nämlich ein Befestigungsblock, der aus Kunststoff besteht. Sechs solcher Befestigungsblöcke sind an der Rückwand angeschweißt. Die in dem Formkörper 32 vorgesehene Bohrung 33 dient der Aufnahme einer Schraube, die durch eine Bohrung in einer Lagerleiste der Trägerkonstruktion hindurch in die Bohrung 33 einschraubbar ist. Durch die Gitterstruktur des Lagerbockes ist das Bauteil auch sehr leicht und kann in beliebigen Größen gefertigt werden. Die Laschen 10 stehen seitlich hervor oder sind in den Formkörper eingebettet, so dass hierüber eine Schweißverbindung mit der Rückwand 1 hergestellt werden kann. Auch hier braucht keine zusätzliche Rahmenkonstruktion vorgesehen sein. Dies verbilligt sowohl das Photovoltaikmodul als auch die Montage wesentlich. Anstelle der in den Beispielen gezeigten zweiseitigen Befestigung können auch an den übrigen Seiten Laschen zur Befestigung vorstehen.

### Bezugszeichenliste

- 1: Rückwand
- 2: Stromleiter
- 3: Stromleiter
- 4: Anschlussdose
- 5: Befestigungsmittel
- 6: Basiskörper
- 7: Basiskörper
- 8: Aus- und Anformungen
- 9: Lasche
- 10: Lasche
- 11: Blechstreifen
- 12: Versteifungen
- 13: Durchgangslöcher
- 14: Flächenabschnitt
- 15: Deckel
- 16: Kappe
- 17: Niederhalter
- 18: Stempel
- 19: Aufnahmen
- 20: Kabelende
- 21: Deckel
- 22: Gehäuse
- 23: Leiterplatte
- 24: elektrische Bauelemente
- 25: Kontaktstreifen
- 26: O-Ringe
- 27: Leiterenden
- 28: Schrauben
- 29: Durchgangsloch
- 30: Dichtungsring
- 31: Rastnasen
- 32: Formkörper
- 33: Bohrung
- 34: Haken

## Patentansprüche

1. Photovoltaikmodul, mindestens aufweisend eine Rückwand (1), eine Schicht mit Photovoltaikelementen und streifenförmigen Stromleitern (2, 3), eine frontseitige Schutzplatte, eine rück- und/oder frontseitig angebrachte Anschlussdose (4) mit mindestens einem Kontakt zum Verbinden eines Leiters eines Anschlusskabels mit mindestens einem streifenförmigen Stromleiter (2, 3) und/ oder Befestigungsmitteln (5) zum Fixieren des Photovoltaikmoduls an einer Trägerkonstruktion, wobei die Rückwand (1) und/oder die Schutzplatte aus Glas bestehen und die Anschlussdose (4) und/oder die Befestigungsmittel (5) Formteile (32) aus Kunststoff oder Druckguss oder Blech sind, die an einer Seite mit einer Fläche an der Rückwand (1) oder an der Schutzplatte anliegen und an der anderen Seite als Funktionseinheit ausgebildet sind und Aus- und Anformungen (8) für die Aufnahme von elektrischen und/oder mechanischen Bauelementen, Haltern und/oder eines Gehäusedeckels (21) aufweisen, wobei in dem Formteil (32) mindestens an zwei gegenüberliegenden Seiten vorstehende Laschen (10) aus Metall eingebettet oder solche aus Metall oder Führungen zur Aufnahme von übergreifenden Metallstreifen angeformt sind, deren Enden als Laschen an der Rückwand (1) oder der Schutzplatte anliegen, und
wobei die Metalllaschen (10) durch Ultraschallschweißung an der aus Glas bestehenden Rückwand (1) oder an der aus Glas bestehenden Schutzplatte angeschweißt sind.

2. Photovoltaikmodul nach Anspruch 1, **dadurch gekennzeichnet, dass** die Anschlussdose (4) und/oder die Befestigungsmittel (5) jeweils einen Basiskörper (6, 7) aus Kunststoff oder Druckguss oder Blech aufweisen, der an einer Seite mit einer Fläche an der Rückwand (1) oder an der Schutzplatte anliegt, dass an der anderen Seite des Basiskörpers (6, 7) Aus- und Anformungen (8) für die Aufnahme von elektrischen und/oder mechanischen Bauelementen, Haltern und eines Gehäuses (22) oder eines Deckels (21) vorgesehen sind und dass der Basiskörper (7) ein Loch aufweist, durch das die streifenförmigen Stromleiter (2, 3) zugänglich sind.

3. Photovoltaikmodul nach Anspruch 1 oder 2, **dadurch gekennzeichnet, dass** an den gegenüberliegenden Seiten des Basiskörpers (6, 7) mehrere Laschen (9, 10) in definierten Abständen zueinander eingebettet sind oder ein Blechstreifen in dem Kunststoff eingebettet, dessen überstehender Streifen eine durchgehende Lasche (10) bildet.

4. Photovoltaikmodul nach Anspruch 1 oder 2, **dadurch gekennzeichnet, dass** die eingebetteten Laschenenden aus Metall oder der eingebettete Blechstreifen (11) ein-gedrückte Versteifungen (12) und/oder Durchgangslöcher (13) aufweisen, die von dem Kunststoff vollständig umschlossen sind.

5. Photovoltaikmodul nach Anspruch 4, **dadurch gekennzeichnet, dass** die Versteifung (12) Erhebungen sind und dass der zwischen zwei benachbarten Erhebungen vorhandene Flächenabschnitt (14) des Blechstreifens (11) an der Schutzplatte oder der Rückwand (1) zusätzlich zu den überstehenden Laschen anliegt und im Formteil (32) oder im Basiskörper (6, 7) Öffnungen vorgesehen sind, durch die der Blechstreifen (11) mindestens punktuell anschweißbar ist.

6. Photovoltaikmodul nach Anspruch 1 oder 2, **dadurch gekennzeichnet, dass** der Deckel (15, 21) Aufnahmen aufweist, in die Leiterplatten und/oder Kühlkörper mit elektronischen Bauelementen (24) und/oder mechanische Bauteile, Kabelenden und abgewinkelte zungenförmige Kontaktstreifen (25) einsetzbar sind, die beim Zusammenfügen des Deckels mit dem Basiskörper (6, 7) auf die streifenförmigen Stromleiter (2, 3) aufgreifen.

7. Photovoltaikmodul nach Anspruch 1 oder 2, **dadurch gekennzeichnet, dass** mit dem Formteil (32) oder dem Basiskörper (7) oder einem daran befestigten Gehäuse (22) ein Deckel (15, 21) verbindbar ist, dass oberhalb der Kontaktierungsstellen an den Stromleitern (2, 3) mindestens ein Loch in dem Deckel (15) eingebracht ist, durch das hindurch die Kontaktstreifen an die Stromleiter (2, 3) anschweißbar sind, oder dass ein Niederhalter (17) in das Loch einsetzbar ist, der mit einem Stempel (18) den Kontaktstreifen auf den Stromleiter (2, 3) drückt und dass das Durchgangsloch (29) durch einen Stopfen oder eine Kappe (16) verschließbar ist.

8. Photovoltaikmodul nach Anspruch 7, **dadurch gekennzeichnet, dass** in dem Deckel (15) und dem Basiskörper (7) halbschalenförmige Aufnahmen (19) zur Aufnahme von einem Kabelende (20) vorgesehen sind.

9. Photovoltaikmodul nach Anspruch 1 oder 2, **dadurch gekennzeichnet, dass** der Formkörper (32) oder der Basiskörper (6, 7) mit einer umlaufenden Dichtung versehen ist, die diesen Basiskörper (6, 7) gegenüber der Rückwand (1) oder der Schutzplatte hermetisch abdichtet.

10. Photovoltaikmodul nach Anspruch 2, **dadurch gekennzeichnet, dass** der Basiskörper (6, 7) als Universalträger ausgebildet ist und Rippen und Kammern sowie Aufnahmen aufweist, die unterschiedlich belegbar oder bestückbar und mit unterschiedlichen Haltern adaptierbar sind.

11. Photovoltaikmodul nach Anspruch 1 oder 2, in Verbindung mit Anspruch 10, **dadurch gekennzeichnet, dass** an dem Halter hakenförmige Klemmeinrichtungen befestigbar sind, durch die ein quer verlaufendes Metallband ziehbar und mit den Enden an der Rückwand (1) oder der Schutzwand anschweißbar ist.

12. Photovoltaikmodul nach Anspruch 2, **dadurch gekennzeichnet, dass** die Grundform des Basiskörpers (6, 7) rechteckförmig und die der anfügbaren Halter, Deckel und anderer Elemente beliebige Strukturen aufweisen, wobei die Befestigungsmittel an dem Basiskörper (6, 7) entsprechend angepasst sind.

13. Photovoltaikmodul nach Anspruch 1, **dadurch gekennzeichnet, dass** das Formteil (32) angeformte Haken (34) aufweist.

14. Photovoltaikmodul nach Anspruch 1, **dadurch gekennzeichnet, dass** das Formteil (32) als Befestigungsblock mit einer Befestigungsbohrung (33) ausgebildet ist.

## Claims

1. Photovoltaic module, comprising at least a back wall (1), a layer with photovoltaic elements and strip-shaped current conductors (2, 3), a frontal protection plate, a connection socket (4), which is mounted at the rear side and/or front side, with at least one contact for connection of a conductor of a connecting cable with at least one strip-shaped current conductor (2, 3) and/or fastening means (5) for fixing the photovoltaic module to a support construction, wherein the rear wall (1) and/or the protection plate consists or consist of glass and the connection socket (4) and/or the fastening means (5) is or are shaped parts (32) of plastics material or diecasting or sheet metal, which bear at one side by a surface against the rear wall (1) or against the protection plate and are constructed at the other side as a functional unit and have shaped-out portions and shaped-on portions (8) for the mounting of electrical and/or mechanical components, holders and/or a housing cover (21), wherein straps (10) of metal protruding on at least two opposite sides are embedded in the shaped part (32) or straps of metal or guides for mounting of overlapping metal strips are integrally formed, the ends of which bear, as straps, against the rear wall (1) or the protection plate, and wherein the metal straps (10) are welded by ultrasonic welding to the rear wall (1) consisting of glass or to the protection plate consisting of glass.

2. Photovoltaic module according to claim 1, **characterised in that** the connection socket (4) and/or the fastening means (5) each comprise a base body (6, 7) of plastics material or diecasting or sheet metal, which bears at one side by a surface against the rear wall (1) or against the protection plate, that shaped-out portions and shaped-on portions (8) for the mounting of electrical and/or mechanical components, holders and a housing (22) or a cover (21) are provided at the other side of the base body (6, 7) and that the base body (7) has a hole through which the strip-shaped current conductors (2, 3) are accessible.

3. Photovoltaic module according to claim 1 or 2, **characterised in that** several straps (9, 10) are embedded at defined mutual spacings at opposite sides of the base body (6, 7) or a sheet-metal strip is embedded in the plastics material, the protruding strip of which forms a continuous strap (10).

4. Photovoltaic module according to claim 1 or 2, **characterised in that** the embedded strap ends of metal or the embedded sheet-metal strip (11) have impressed stiffening portions (12) and/or passage holes (13), which are completely surrounded by the plastics material.

5. Photovoltaic module according to claim 4, **characterised in that** the stiffening portions (12) are elevations and that the area section (14), which is present between two adjacent elevations, of the sheet-metal strip (11) bears against the protection plate or the rear wall (1) in addition to the protruding straps and openings through which the sheet-metal strip (11) can be welded at least in spots are provided in the shaped part (32) or in the base body (6, 7).

6. Photovoltaic module according to claim 1 or 2, **characterised in that** the cover (15, 21) has receptacles into which circuitboards and/or cooling bodies with electronic components (24) and/or mechanical components, cable ends and angled tongue-shaped contact strips (25) are insertable, which when the cover is joined to the base body (6, 7) engage the strip-shaped current conductors (2, 3).

7. Photovoltaic module according to claim 1 or 2, **characterised in that** a cover (15, 21) is connectible with the shaped part (32) or the base body (7) or a housing (22) fastened thereto, that formed in the cover (15) above the contact points at the current conductors (2, 3) is at least one hole through which the contact strips can be welded to the current conductors (2, 3) or that a holding-down device (17), which by a die (18) presses the contact strips onto the current conductors (2, 3), is insertable into the hole, and that the passage hole (29) is closable by a plug or a cap (16).

8. Photovoltaic module according to claim 7, **characterised in that** half-shell-shaped receptacles (19) for reception of a cable end (20) are provided in the cover (15) and the base body (7).

9. Photovoltaic module according to claim 1 or 2, **characterised in that** the shaped body (32) or the base body (6, 7) is provided with an encircling seal which hermetically seals this base body (6, 7) relative to the rear wall (1) or the protection plate.

10. Photovoltaic module according to claim 2, **characterised in that** the base body (6, 7) is constructed as a universal support and has ribs and chambers as well as receptacles, which can be occupied or equipped in different manner and which can be adapted by different holders.

11. Photovoltaic module according to claim 1 or 2 in conjunction with claim 10, **characterised in that** hook-shaped clamping devices by which a transversely extending metal band can be tightened and is weldable by the ends to the rear wall (1) or the protection wall, are fastenable to the holder.

12. Photovoltaic module according to claim 2, **characterised in that** the basic shape of the base body (6, 7) is rectangular and those of the attachable holders, cover and other elements have any desired structures, when the fastening means are appropriately adapted to the base body (6, 7).

13. Photovoltaic module according to claim 1, **characterised in that** the shaped part (32) has integrally formed hooks (34).

14. Photovoltaic module according to claim 1, **characterised in that** the shaped part (32) is constructed as a fastening block with a fastening bore (33).

## Revendications

1. Module photovoltaïque, présentant au moins un paroi arrière (1), une couche avec des éléments photovoltaïque et des conducteurs électriques en forme de bande (2, 3), une plaque de protection frontale, une prise de connexion placée sur la partie arrière et/ou la partie frontale (4) avec au moins un contact pour connecter le conducteur d'un câble de raccordement avec au moins un conducteur électrique en forme de bande (2, 3) et/ou des moyens de fixation (5) pour fixer le module photovoltaïque sur une structure porteuse, la paroi arrière (1) et/ou la plaque de protection étant en verre et la prise de connexion (4) et/ou les moyens de fixation (5) étant des pièces formées (32) en plastique ou en fonte ou en tôle qui sont placées sur un côté avec une surface sur la paroi arrière (1) ou sur la plaque de protection et qui sont formées de l'autre côté en tant qu'unité fonctionnelle et qui présentent des extensions et des évidements (8) pour le logement d'éléments de construction électriques et/ou mécaniques, de supports et/ou d'un couvercle de carter (12), des languettes en saillie (10) en métal étant intégrées dans la pièce formée (32) sur au moins deux côtés opposés ou de telles languettes en métal ou des guidages de logement des bandes en métal fractionnées étant formées dont les extrémités sont situées en tant que languettes sur la paroi arrière (1) ou sur la plaque de protection et les languettes en métal (10) étant soudées par soudage par ultra-sons sur la paroi arrière en verre (1) ou sur la plaque de protection en verre.

2. Module photovoltaïque selon la revendication 1 caractérisé en cela que la prise de connexion (4) et/ou les moyens de fixation (5) présentent respectivement un corps de base (6, 7) en plastique ou en fonte ou en tôle qui est placé d'un côté avec une surface contre la paroi arrière (1) ou sur la plaque de protection, que sur l'autre côté du corps de base (6, 7) des extensions et des évidements (8) sont prévus pour le logement des éléments de construction électriques et/ou mécaniques, des supports et d'un carter (22) ou d'un couvercle (21) et que le corps de base (7) présente un trou à travers lequel les conducteurs électriques (2, 3) en forme de bandes sont accessibles.

3. Module photovoltaïque selon la revendication 1 ou 2 caractérisé en cela que sur les côtés opposés du corps de base (6, 7) plusieurs languettes (9, 10) sont intégrées dans les espaces définis entre eux ou un bande de tôle est intégrée dans le plastique et forme avec les bandes situées au-dessus une languette continue (10).

4. Module photovoltaïque selon la revendication 1 ou 2 caractérisée en cela que les extrémités intégrées des languettes en métal ou la bande intégrée en tôle (11) présentent des renforts enfoncés (12) et/ou des trous de passage (13) qui sont entièrement entourés de plastique.

5. Module photovoltaïque selon la revendication 4 caractérisé en cela que le renfort (12) sont des saillies et que la section disponible entre deux saillies voisines (14) dans la bande de tôle (11) est située sur la plaque de protection ou sur la paroi arrière (1) en plus des languettes situées au-dessus et que dans la pièce formée (32) ou dans le corps de base (6, 7) des ouvertures sont prévues à travers lesquelles la bande en tôle (11) peut être soudée au moins par points.

6. Module photovoltaïque selon la revendication 1 ou 2 caractérisé en cela que le couvercle (15, 21) présente des logements dans lesquels des plaques de conducteur et/ou des corps refroidissant avec des éléments de construction électronique (24) et/ou des pièces de construction mécaniques, des extrémités de câble et des bandes de contact coudées en forme de langue (25) peuvent être insérés et agissent lors du rassemblement du couvercle et du corps de base (6, 7) sur les conducteurs électriques en forme de bande (2, 3).

7. Module photovoltaïque selon la revendication 1 ou 2 caractérisé en cela qu'un couvercle (15, 21) peut être relié à la pièce formée (32) ou au corps de base (7) ou à un carter fixé dessus (22), qu'au-dessus des zones de contact sur les conducteurs électriques (2, 3) au moins un trou est placé dans le couvercle (15) à travers lequel les bandes de contact peuvent être soudées sur les conducteurs électriques (2, 3) ou qu'un serre-flanc (17) peut être inséré dans le trou et appuie avec un tampon (18) la bande de contact sur le conducteur électrique (2, 3) et que le trou de passage (29) peut être fermé par un bouchon ou un capuchon (16).

8. Module photovoltaïque selon la revendication 7 caractérisé en cela que des logements en forme de demi-coques (19) sont prévus dans le couvercle (15) et le corps de base (7) pour le logement d'une extrémité de câble.

9. Module photovoltaïque selon la revendication 1 ou 2 caractérisé en cela que le corps formé (32) ou le corps de base (6, 7) est pourvu d'un joint périphérique qui étanchéifie hermétiquement ce corps de base (6, 7) par rapport à la paroi arrière (1) ou à la plaque de protection.

10. Module photovoltaïque selon la revendication 2 caractérisé en cela que le corps de base (6, 7) est formé en tant que support universel et présente des côtes et des chambres ainsi que des logements qui peuvent être occupés ou équipés différemment et peuvent être adaptés avec différents supports.

11. Module photovoltaïque selon la revendication 1 ou 2 en lien avec la revendication 10 caractérisé en cela que des dispositifs à broche en forme de crochet peuvent être fixés sur le support à travers lesquels une bande métallique transversale peut être tirée et peut être soudée avec les extrémités sur la paroi arrière (1) ou la paroi de protection.

12. Module photovoltaïque selon la revendication 2 caractérisé en cela que la forme de base du corps de base (6, 7) présente des structures rectangulaire et que la forme de base des supports, des couvercles et des autres éléments pouvant être ajoutés présentent des structures aléatoire, les moyens de fixation étant ajustés en conséquence sur le corps de base (6, 7).

13. Module photovoltaïque selon la revendication 1 caractérisé en cela que la pièce formée (32) présente des crochets formés (34).

14. Module photovoltaïque selon la revendication 1 caractérisé en cela que la pièce formée (32) est formée en tant que bloc de fixation avec un alésage de fixation (33).
